# EUROPEAN PATENT APPLICATION

(11) **EP 2 219 098 A1**
(43) Date of publication of application: **18.08.2010**
(21) Application number: 09173894.8
(22) Date of filing: 23.10.2009
(51) Int. Cl.: G06F 3/01

(54) **Human interaction systems using kinesthetic feedback and operating method thereof**

(30) Priority: 16.02.2009 KR 20090012299
(71) Applicant: Korea Advanced Institute of Science and Technology, Daejeon 305-701 (KR)
(72) Inventor: Kim, Seung-Chan, Daejeon 305-755 (KR); Lim, Jong Gwan, Chungchecongbuk-do 361-807 (KR); Yang, Tae-Heon, Daejeon 305-701 (KR); Han, Byung-Kil, Gyeonggi-do 440-800 (KR); Kwon, Dong-Soo, Daejeon 305-773 (KR)
(74) Representative: ZBM Patents

(57) **Abstract**

Disclosed herein are human interaction systems using kinesthetic feedback and an operating method thereof. Each of the human interaction systems includes a driver driving the human interaction system according to handling of a user and generating kinesthetic feedback; a sensor measuring force, physical quantity and path applied by the driver; a converter converting a motion signal of the driver, measured by the sensor, into an electric signal in order to transmit and receive the motion signal; and a communication module transmitting and receiving the electric signal. Accordingly, a user can deliver kinesthetic feedback corresponding to his/her motion as well as voices to the other person through a mobile terminal. Accordingly, the user can deliver various feelings in addition to voices. Furthermore, the user can deliver his/her intention to the other person in a conference where the user is restrained from speaking. Moreover, the user can enjoy more realistic games through kinesthetic feedback when performing interaction games through the mobile terminal.

## Description

### BACKGROUND OF THE INVENTION

### Field of the Invention

The present invention relates to human interaction systems using kinesthetic feedback and an operating method thereof, and more particularly, to human interaction systems using kinesthetic feedback and an operating method thereof for allowing users of at least two human interaction systems to deliver/receive kinesthetic feedbacks corresponding to their operations to/from each other.

### Background of the Related Art

Recently, a mobile terminal used for mobile communication or a portable device such as a PMP, a PDP and a navigation system has been widely used. The mobile terminal has a basic function of telephone call or scheduling. However, the utilization range of the mobile terminal becomes wider to reach capturing images through a digital camera attached to the mobile terminal, watching satellite broadcasting and playing mobile games.

Furthermore, devices and methods that attach a motion sensor to a mobile terminal and handle the motion and tilting of the mobile terminal to operate the mobile terminal without depending only on a keypad composed of buttons or a touch screen are widely spread.

However, the conventional devices generate only Vibratactile feedback corresponding to their motions, such as vibrations generated at a liquid crystal display panel or a keypad. Further, the motion or tilting of the mobile terminal also generates only feedback corresponding to a reaction to the motion or tilting. This limited feedback cannot allow a person to deliver his/her intension to the other person or the two persons to respond to each other.

### SUMMARY OF THE INVENTION

Accordingly, the present invention has been made in view of the above-mentioned problems occurring in the prior art, and it is a primary object of the present invention to provide human interaction systems using kinesthetic feedback and an operating method thereof for allowing users of at least two human interaction systems to deliver/receive kinesthetic feedbacks corresponding to their operations to/from each other.

To accomplish the above object of the present invention, according to the present invention, there is provided
human interaction systems using kinesthetic feedback, which are connected to each other through communication, each human interaction system including a driver driving the human interaction system according to handling of a user and generating kinesthetic feedback; a sensor measuring force, physical quantity and path applied by the driver;
a converter converting a motion signal of the driver, measured by the sensor, into an electric signal in order to transmit and receive the motion signal; and a communication module transmitting and receiving the electric signal.
The human interaction systems may use folder type mobile terminals, slide type mobile terminals, or flexible displays.
The driver may use a DC motor, a linear motor or an SMA and include a brake, such as a magnetic particle brake, a linear brake or a shape memory alloy (SMA), for restricting motions of the human interaction systems.
The converter 500 includes an encoder encoding motion information measured by the sensor into an electric signal; and a decoder decoding an electric signal received through the communication module. The encoder may correspond to a linear encoder.
According to another aspect of the present invention, there is provided a method of operating first and second human interaction systems connected to each other through communication, which includes a first step in which a user 10 applies a force to the first human interaction system to handle the first human interaction system; a second step in which a sensor included in the first human interaction system measures the motion magnitude and path of the first human interaction system; a third step of converting a motion signal of the first human interaction system, measured by the sensor, into an electric signal; a fourth step of transmitting the electric signal to the second human interaction system; a fifth step of converting the electric signal received by the second human interaction system into a motion signal; and a sixth step of making the second human interaction system move by the same magnitude and path as those of the motion of the first human interaction system.
The first through sixth steps may be performed by a DC motor, a linear motor or an SMA.
The method may further include a seventh step of transmitting kinesthetic feedback corresponding to a force caused by an obstacle or an external force to the first human interaction system when the second human interaction system is obstructed by the obstacle or the external force is applied to the second human interaction system.
The seventh step includes a first step of applying the external force having magnitude different from that of the motion of the first human interaction system 100 to the second interaction device; a second step in which a sensor included in the second human interaction system measures motion information corresponding to the external force; a third step of converting the motion information into an electric signal; a fourth step of transmitting the electric signal from the second human interaction system to the first human interaction system; a fifth step of converting the electric signal received by the first human interaction system into a motion signal; and a sixth step of providing kinesthetic feedback corresponding to the motion signal to the user.
The fifth step may include a step of comparing the motion signal received from the second human interaction system with a motion signal generated by the user and moving the first and second human interaction systems to a predetermined position.
There may be two, three or four human interaction systems. Two or more human interaction systems can be broadcasted via a network.

According to the present invention, a user can deliver kinesthetic feedback corresponding to his/her motion as well as voices to the other person through a mobile terminal. Accordingly, the user can deliver various feelings in addition to voices. Furthermore, the user can deliver his/her intention to the other person in a conference where the user is restrained from speaking. Moreover, the user can enjoy more realistic games through kinesthetic feedback when performing interaction games through the mobile terminal.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is a block diagram of human interaction systems using kinesthetic feedback according to the present invention;

FIG. 2 is a perspective view of human interaction systems using kinesthetic feedback according to a first embodiment of the present invention;

FIG. 3 is a perspective view of human interaction systems using kinesthetic feedback according to a second embodiment of the present invention;

FIG. 4 is a front view of human interaction systems using kinesthetic feedback according to a third embodiment of the present invention;

FIG. 5 is a flowchart showing a method of operating the human interaction systems using kinesthetic feedback according to the present invention;

FIG. 6 shows mechanical motions of the human interaction systems using kinesthetic feedback according to the present invention;

FIGS. 7a and 7b show examples of using the human interaction systems using kinesthetic feedback according to the first embodiment of the present invention;

FIGS. 8a and 8b show examples of using the human interaction systems using kinesthetic feedback according to the second embodiment of the present invention; and

FIGS. 9a to 9c show examples of using the human interaction systems using kinesthetic feedback according to the third embodiment of the present invention.

### DETAILED DESCRIPTION OF THE PREFERRED EMBODIMENT

Hereinafter, the present invention will be described in detail by explaining preferred embodiments of the invention with reference to the attached drawings.

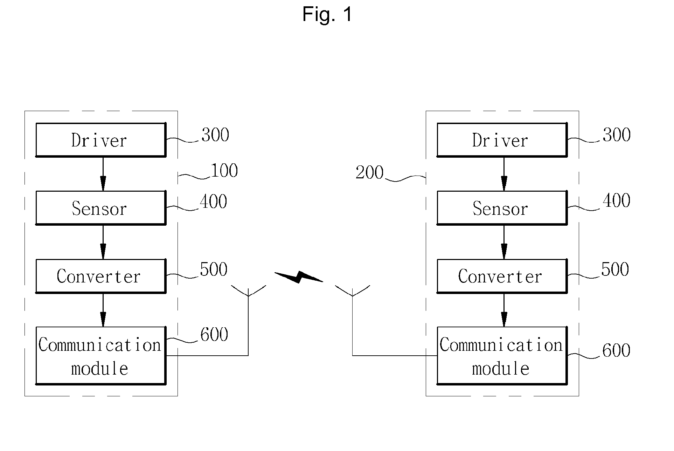

FIG.1 is a block diagram of human interaction systems using kinesthetic feedback according to the present invention.

(First embodiment)

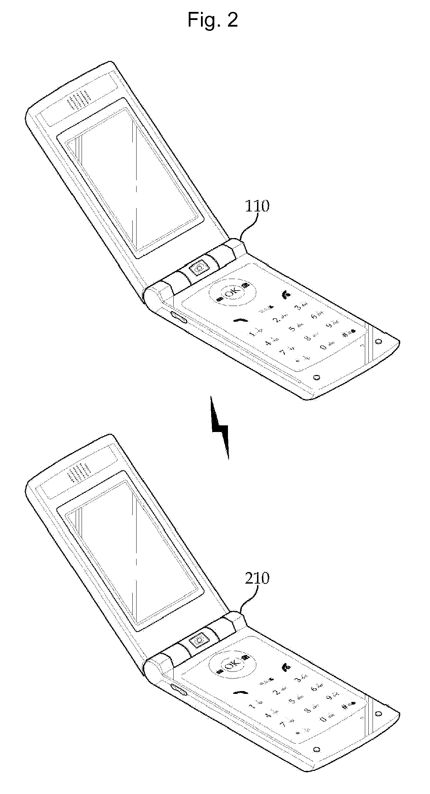

FIG. 2 is a perspective view of human interaction systems using kinesthetic feedback according to a first embodiment of the present invention. Referring to FIG. 2, the interaction systems using kinesthetic feedback according to the first embodiment of the invention use folder type mobile terminals 110 and 210. For convenience of explanation, a mobile terminal initially operated by a user is referred to as a first terminal 110 and a mobile terminal that responds to the first terminal 110 is referred to as a second terminal 210 hereinafter.

Referring to FIG. 1, the first and second terminals 110 and 210 respectively include a driver 300, a sensor 400, a converter 500 and a communication module 600. Here, the driver 300 operates the second terminal 210 such that the second terminal 210 responds to the first terminal 110 or delivers kinesthetic feedback corresponding to a motion of the second terminal 210 to the user through the first terminal 110. Any driving device can be used as the driver 300 if it can perform the aforementioned operation. Preferably, a motor for rotating folders of the first and second terminals 110 and 210 is used as the driver 300. More preferably, a DC motor is used. Further, a brake for restricting the operation of the driver 300 is provided at one side of the driver 300. When an external force is applied to the first or second terminal 110 and 210, to counteract the motion of the other terminal, the brake is used for the purpose of restricting the motion of the other terminal. Any brake can be used if it can accomplish this purpose. Preferably, a magnetic particle brake that is stable and has high response time is used. The magnetic particle brake can easily control a torque voltage and output torque.

The sensor 400 according to the first embodiment of the invention measures motion magnitude and path of the driver 300 driven by an external force such as handling of the user. Any sensor can be used as the sensor 400 if it can measure motion magnitude and path of the driver 300 that drives the folders of the first and second terminals 110 and 210.

The converter 500 according to the first embodiment of the invention is used for the purpose of converting a motion signal of the first terminal 10, measured by the sensor 400, into an electric signal for communication or converting an electric signal received by the second terminal 210 into a motion signal for driving the second terminal 210. Any converter can be used if it can accomplish the aforementioned purpose. However, it is preferable to use a converter including an encoder that is attached to the driver 300 and encodes a motion signal and a decoder that removes noise from a received electric signal and decodes the electric signal into a signal for communication.

The communication module 600 according to the first embodiment of the invention is used for communication between the first and second terminals 110 and 210 and includes a data module of a conventional terminal and a data communication module 600 for controlling the terminal.

(Second embodiment)

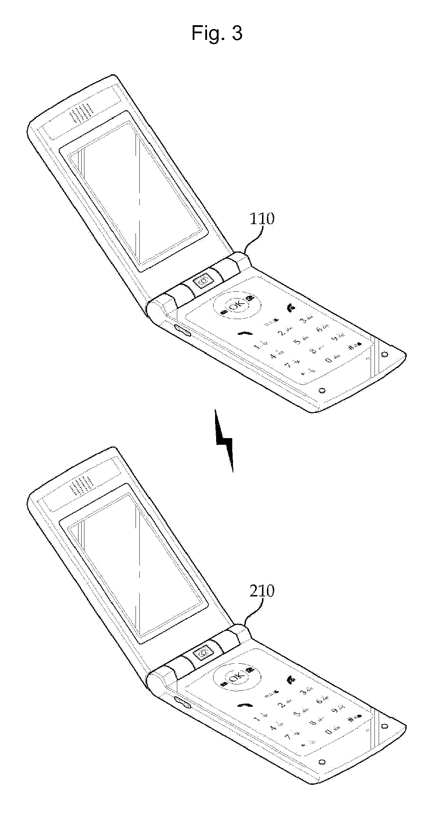

FIG. 3 is a perspective view of human interaction systems using kinesthetic feedback according to a second embodiment of the present invention. Referring to FIG. 3, the human interaction systems according to the second embodiment of the invention use slide type terminals 120 and 220. The configurations of the human interaction systems 120 and 220 according to the second embodiment of the invention are similar to those of the human interaction systems 110 and 210 according to the first embodiment of the invention, as shown in Fig. 1. However, the slide type terminals 120 and 220 perform a rotary motion different from that of the folder type terminals 110 and 210, and thus the slide type terminals 120 and 220 have a configuration corresponding to the rotary motion.

The driver 300 according to the second embodiment of the invention is used for the same purpose and effect as those of the driver 300 of the human interaction systems according to the first embodiment of the invention. The driver 300 according to the second embodiment of the invention uses a linear motor suitable for linear movement of a slide. Further, the brake for restricting the movement of the driver 300 uses a linear brake suitable to restrict linear movement. The linear brake is easy to restrict linear movement and has satisfactory performance and high stability.

The converter 500 according to the second embodiment of the invention includes a linear encoder and a linear decoder for data conversion according to linear movement.

The sensor 400 and the communication module 600 according to the second embodiment of the invention are identical to those of the human interaction systems according to the first embodiment of the invention so that detailed description thereof is omitted.

(Third embodiment)

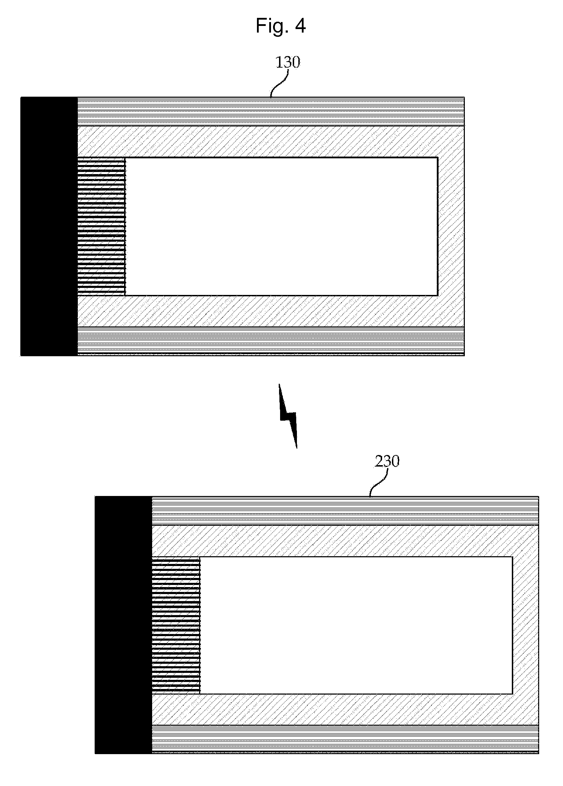

FIG. 4 is a front view of human interaction systems using kinesthetic feedback according to a third embodiment of the present invention. Referring to FIG. 4, the human interaction systems according to the fourth embodiment of the invention use flexible displays 130 and 230. The configurations of the human interaction systems 130 and 230 according to the third embodiment of the invention are similar to those of the human interaction systems 110 and 210 according to the first embodiment of the invention. However, the flexible displays 130 and 230 make a motion completely different from those of the terminals 110, 120, 210 and 220, and thus the flexible displays 130 and 230 have a configuration corresponding thereto.

The flexible displays 130 and 230 are driven by a plurality of wires or shape memory alloy (SMA) strips provided at one side of a display unit displaying images.

The driver 300 according to the third embodiment of the invention is used for the same purpose and effect as those of the driver 300 according to the first embodiment of the invention and uses a DC motor or an SMA to drive the wires or SMA strips for operating the flexible displays 130 and 230.

Each of the flexible displays 130 and 230 includes a plurality of sensors 400 which are arranged at one side thereof, preferably, a mainly bent side of the flexible display, and measure a bending direction and magnitude of the flexible display. Any sensor can be used if it can perform this operation. Preferably, a bending sensor using resistance or an optical fiber function is used.

The converter 500 and the communication module 600 according to the third embodiment of the invention are similar to those of the human interaction systems according to the first or second embodiment of the present invention so that detailed explanations thereof are omitted.

(Modified embodiment)

The human interaction systems 100 and 200 using kinesthetic feedback according to the present invention can be also applied to a PDP, PMP, notebook computer or industrial equipment that can be operated according to intercommunication in addition to the devices according to the first, second and third embodiments of the invention. For example, hinge angles of notebook computers connected to each other can be mutually controlled according to the aforementioned principle. In the same manner, hinges of monitors of desktop PCs connected to each other can be controlled through the aforementioned principle.

<Method of operating human interaction systems using kinesthetic feedback>

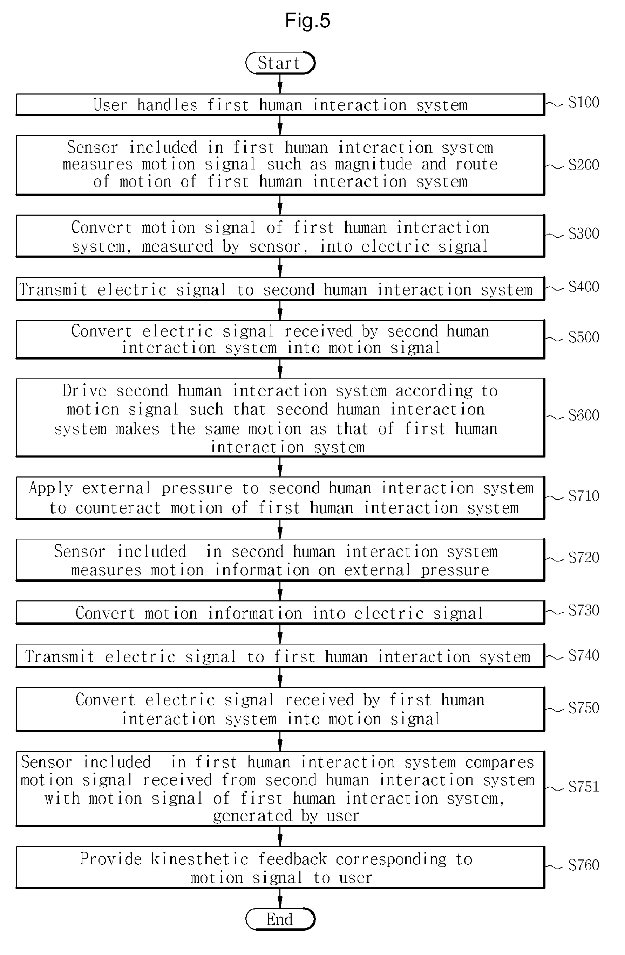

FIG. 5 is a flowchart showing a method of operating the human interaction systems using kinesthetic feedback according to the present invention. Referring to FIGS. 1 and 5, a user applies a force to the first human interaction system 100 to handle the first human interaction system 100 in step S100.

The sensor 400 included in the first human interaction system 100 measures motion information such as motion magnitude and path of the first human interaction system 100 handled by the user in step S200. The sensor 400 may use a force sensor, a torque sensor, a motion sensor, an acceleration measurement sensor or a velocity sensor because the first human interaction system 100 can make various motions according to its type.

The motion information of the first human interaction system, measured by the sensor 400, is converted into an electric signal for communication in step S300.

The electric signal is transmitted to the second human interaction system 200 in step S400.

The electric signal received by the second human interaction system 200 is converted into a motion signal for driving the second human interaction system 200 in step S500.

The second human interaction system 200 is controlled such that the second human interaction system 200 makes a motion having a magnitude and path corresponding to the received motion signal of the first interaction device 100. In this manner, Primary interaction of the first and second human interaction systems 100 and 200 is accomplished.

When the user continuously handles the first human interaction system 100, steps S100 through S600 are repeated to allow the second human interaction system 200 to make the same motion as that of the first human interaction system 100. Unless the second human interaction system 200 is obstructed by an obstacle or an external force is applied to the second human interaction system 200, the first human interaction system 100 does not generate additional feedback. Accordingly, the user can confirm that the second human interaction system 200 smoothly operates. An operating method when the second human interaction system 200 is obstructed by an obstacle or an external force is applied to the second human interaction system 200 will now be explained.

An external force or an obstacle which counteracts the motion of the first human interaction system 100 is applied to the second human interaction system 200 while the first human interaction system 100 is handled such that the second human interaction system 200 makes the same motion as that of the first human interaction system 100 in step S710.

The sensor 400 of the second human interaction system 200 measures motion information such as motion magnitude and path of the second human interaction system 200, determined by the external force applied to the second human interaction system 200, in step S720.

The motion information is converted into an electric signal for communication in step S730.

The electric signal is transmitted to the first human interaction system 100 from the second human interaction system 200 in step S740.

The electric signal received by the first human interaction system 100 is converted into a motion signal corresponding to the external force applied to the second human interaction system 200 in step S750. Here, information on motion of the first human interaction system 100, generated by the user, can be compared to the motion information on the external force applied to the second human interaction system 200 in step S751.

Kinesthetic feedback corresponding to the motion information on the external force applied to the second human interaction system 200 is provided to the user from the first human interaction system 100 in step S760. Here, the first human interaction system 100 does not generate kinesthetic feedback corresponding to simple vibration such as conventional tactile feedback and generates kinesthetic feedback such as motion of a folder, slide movement, etc.

<Aspect of using interaction systems using kinesthetic feedback>

(First embodiment)

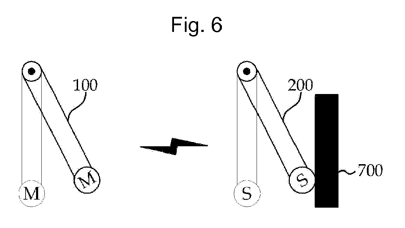

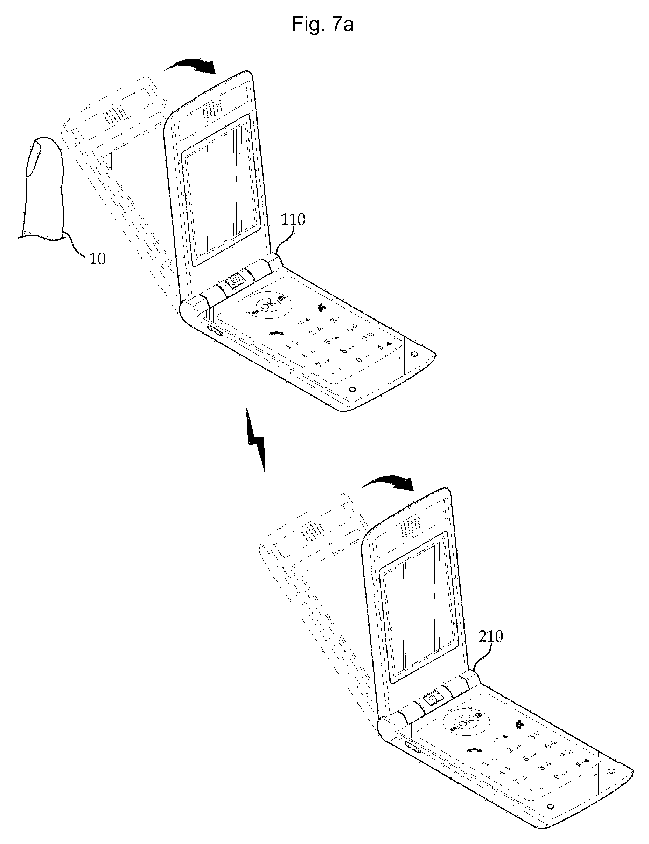

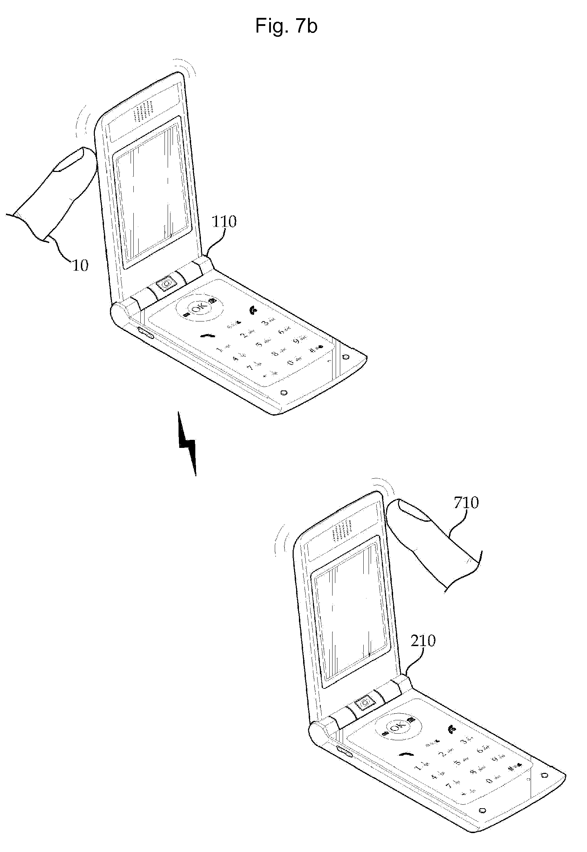

FIG. 6 shows mechanical motions of the human interaction systems using kinesthetic feedback according to the present invention and FIGS. 7a and 7b show examples of using the human interaction systems using kinesthetic feedback according to the first embodiment of the present invention.

Referring to FIGS. 6 and 7a, when a user 10 closes the folder of the first terminal 110 by a predetermined extent, the folder of the second terminal 210 is closed by the same extent without having an additional external operation.

Referring to FIG. 6 and 7b, if the second terminal 210 is obstructed by an obstacle or an external force 710 is applied to the second terminal 210 while the second terminal 210 is driven in interaction with the first terminal 110, the first terminal 110 makes a motion corresponding to the motion of the second terminal 210 to generate feedback to the user 10. This feedback corresponds to kinesthetic feedback. When the external force 710 applied to the second terminal 210 is weaker than the force of the user 10, which is applied to the first terminal 110, feedback is generated in such a manner that the folders of the first and second terminals 110 and 210 are closed slightly or slowly. Further, if the external force 710 is similar to the force of the user 10, the folders of the first and second terminals 110 and 210 vibrate to generate kinesthetic feedback corresponding to the forces applied to the first and second terminals 110 and 210. If the external force 710 applied to the second terminal 210 is greater than the force of the user 10, kinesthetic feedback is generated in such a manner that the folders that are being closed are opened. The users of the first and second terminals 110 and 210 can respond to each other through the kinesthetic feedback.

(Second embodiment)

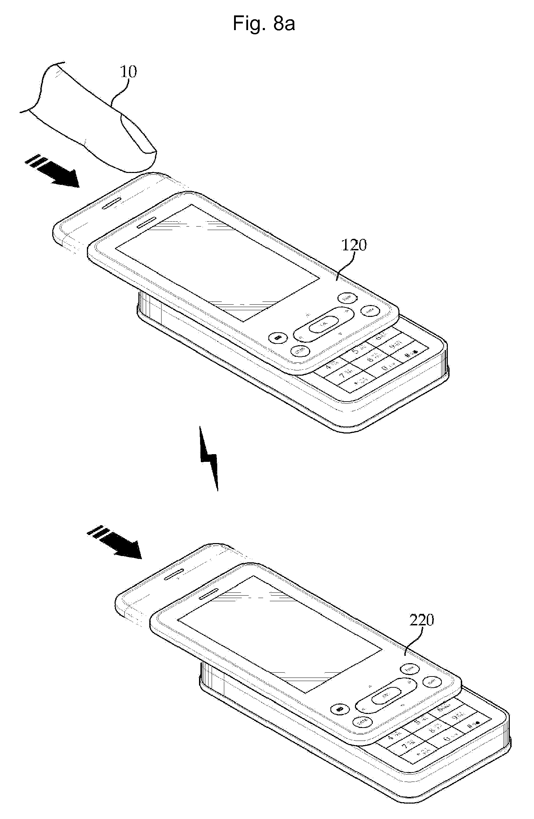

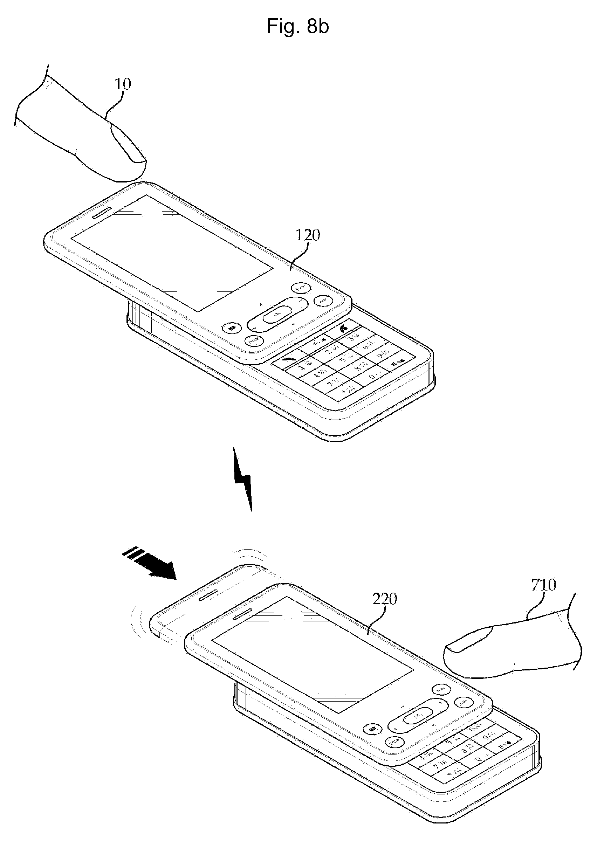

FIGS. 8a and 8b show examples of using the human interaction systems using kinesthetic feedback according to the second embodiment of the present invention. Referring to FIGS. 6 and 8a, when the user 10 slides the first terminal 120, the second terminal 220 slides by the magnitude of the sliding motion of the first terminal 120.

However, if the second terminal 220 is obstructed by an obstacle or an external force 710 is applied to the second terminal 220 while the second terminal 220 is driven in interaction with the first terminal 120, as shown in FIG. 8b, feedback corresponding to the motion of the second terminal 220 is generated in the first terminal 120. This feedback corresponds to kinesthetic feedback. When the external force 710 applied to the second terminal 220 is weaker than the force of the user 10, which is applied to the first terminal 120, feedback is generated in such a manner that the first and second terminals 120 and 220 slowly slide. Further, if the external force 710 is similar to the force of the user 10, slides of the first and second terminals 120 and 220 vibrate to generate kinesthetic feedback corresponding to the forces applied to the first and second terminals 120 and 220. If the external force 710 applied to the second terminal 220 is greater than the force of the user 10, kinesthetic feedback is generated in such a manner that the first and second terminals 120 and 220 reversely slide. The users of the first and second terminals 110 and 210 can respond to each other through the kinesthetic feedback.

(Third embodiment)

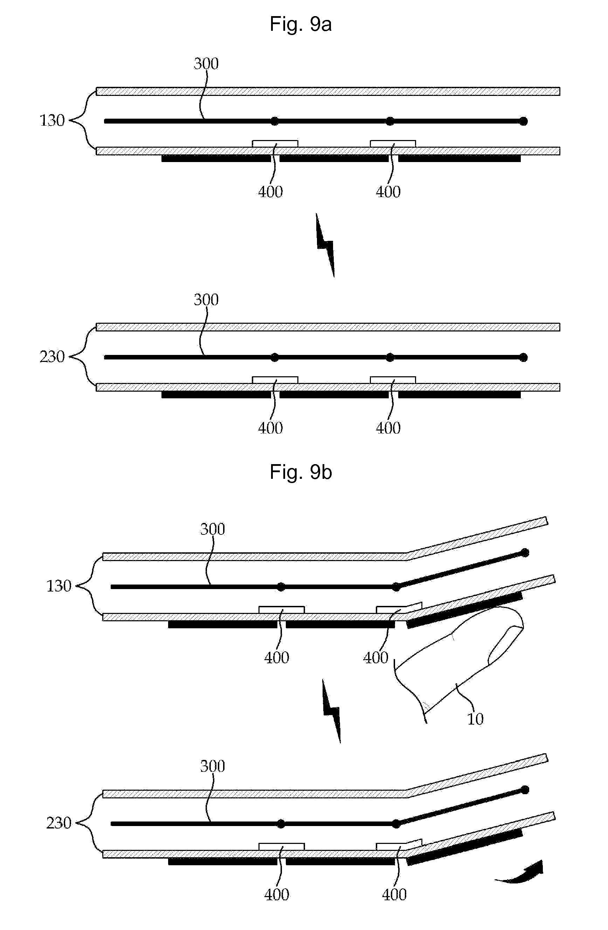

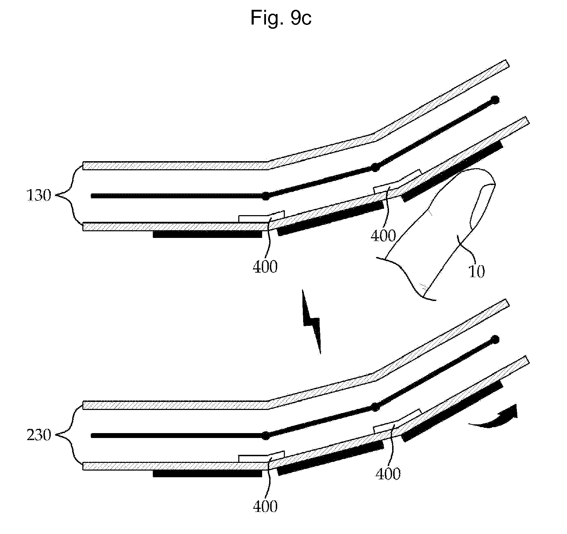

FIGS. 9a to 9c show examples of using the human interaction systems using kinesthetic feedback according to the third embodiment of the present invention. Referring to FIG. 9b, when the user 10 bends the first flexible display 130, the second flexible display 230 is bent by the magnitude of the bending motion of the first flexible display 130 without having an additional external operation.

Bending extents of the first and second flexible displays 130 and 230 can be controlled using the driver 300 such as wires having different lengths. The bending degrees of the first and second flexible displays 130 and 230 are measured at one side of each of the first and second flexible displays 130 and 230, which is close to the end of the wires.

The first and second flexible displays 130 and 230 operate according to an aspect similar to the aspect of using the human interaction systems according to the first or second embodiment of the invention.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. Human interaction systems 100 and 200 using kinesthetic feedback, which are connected to each other through communication, each human interaction system comprising:
a driver 300 driving the human interaction system according to handling of a user 10 and generating kinesthetic feedback;
a sensor 400 measuring force, physical quantity and path applied by the driver 300;
a converter 500 converting a motion signal of the driver 300, measured by the sensor 400, into an electric signal in order to transmit and receive the motion signal; and
a communication module 600 transmitting and receiving the electric signal.

2. The human interaction systems of claim 1, wherein the human interaction systems 100 and 200 correspond to folder type mobile terminals 110 and 210, slide type mobile terminals 120 and 220, or flexible displays 130 and 230.

3. The human interaction systems of claim 1, wherein the driver 300 is a DC motor, a linear motor or an SMA.

4. The human interaction systems of claim 1, wherein the converter 500 comprises:
an encoder encoding motion information measured by the sensor 400 into an electric signal; and
a decoder decoding an electric signal received through the communication module 600.

5. The human interaction systems of claim 4, wherein the encoder corresponds to a linear encoder.

6. The human interaction systems of claim 1, wherein the driver 300 includes a brake that restricts motions of the human interaction systems 100 and 200.

7. The human interaction systems of claim 6, wherein the brake is a magnetic particle brake, a linear brake or an SMA.

8. A method of operating first and second human interaction systems 100 and 200 connected to each other through communication, comprising:
a first step in which a user 10 applies a force to the first human interaction system 100 to handle the first human interaction system;
a second step in which a sensor 400 included in the first human interaction system 100 measures the force, physical quantity and path of the first human interaction system 100;
a third step of converting a motion signal of the first human interaction system 100, measured by the sensor 400, into an electric signal;
a fourth step of transmitting the electric signal to the second human interaction system 200;
a fifth step of converting the electric signal received by the second human interaction system 200 into a motion signal; and
a sixth step of making the second human interaction system 200 move by the same magnitude and path as those of the motion of the first human interaction system 100.

9. The method of claim 8, wherein at least one of the first through sixth steps is performed by a DC motor, a linear motor or an SMA.

10. The method of claim 8, further comprising a seventh step of transmitting kinesthetic feedback corresponding to a force caused by an obstacle or an external force 710 to the first human interaction system 100 when the second human interaction system 200 is obstructed by the obstacle or the external force 710 is applied to the second human interaction system 200.

11. The method of claim 10, wherein the seventh step comprises:
a first step of applying the external force 710 having magnitude different from that of the motion of the first human interaction system 100 to the second interaction device 200;
a second step in which a sensor 400 included in the second human interaction system 200 measures motion information corresponding to the external force 710;
a third step of converting the motion information into an electric signal;
a fourth step of transmitting the electric signal from the second human interaction system 200 to the first human interaction system 100;
a fifth step of converting the electric signal received by the first human interaction system 100 into a motion signal; and
a sixth step of providing kinesthetic feedback corresponding to the motion signal to the user 10.

12. The method of claim 11, wherein the fifth step comprises a step of comparing the motion signal received from the second human interaction system 200 with a motion signal generated by the user 10 and moving the first and second human interaction systems 100 and 200 to a predetermined position.

13. The method of claim 8, wherein there are two, three or four human interaction systems.
